# EUROPÄISCHE PATENTANMELDUNG

(11) **EP 1 772 559 A1**
(43) Veröffentlichungstag der Anmeldung: **11.04.2007**
(21) Anmeldenummer: 06405394.5
(22) Anmeldetag: 18.09.2006
(51) Int. Cl.: E01F 7/04

(54) **Drahtseilanker, insebsondere für Steinschlag-oder Lawinenschutzverbauungen**

(30) Priorität: 10.10.2005 CH 16302005
(71) Anmelder: FATZER AG, CH-8590 Romanshorn (CH)
(72) Erfinder: Roth, Andrea, 5222 Umiken (CH)
(74) Vertreter: Luchs, Willi

(57) **Zusammenfassung**

Bei einem Drahtseilanker, insbesondere für Steinschlag- oder Lawinenschutzsysteme, ist eine wenigstens von einer Schutzhülle ummantelte Seilschlaufe (15) mit den beiden Seilenden (13, 14) im Boden (12) verankerbar. Die Seilenden (13, 14) sind mit einem Verbindungsstück (20) verpresst. Dieses Verbindungsstück (20) weist auf der den Seilenden (13, 14) abgekehrten Seite ein Verbindungsteil (22) für den Anschluss eines im Boden (12) ebenfalls verankerbaren Längselementes (25) auf. Damit kann dieser Drahtseilanker auf handelsübliche Ankerstäbe als Längselemente aufgesetzt werden. Die Bohrstange kann nach dem Bohren auch gleich im Boden belassen und der Drahtseilanker lässt sich auf diese mit einem Schraubengewinde versehene Bohrstange aufschrauben.

## Beschreibung

Die Erfindung bezieht sich auf einen Drahtseilanker, insbesondere für Steinschlag- oder Lawinenschutzsysteme, mit einer Seilschlaufe, welche mit den beiden Seilenden im Boden verankerbar ist und wenigstens von einer Schutzhülle zumindest teilweise ummantelt ist.

Bei einem gattungsmässigen Spiraldrahtseilanker gemäss der Druckschrift EP-A-0 557 241 ist das zu einer Schlaufe gebildete Seil mit seinen Enden im Erdreich verankert. Die Seilenden sind dabei mittels Klammern zusammengehalten. Diese Spiraldrahtseilanker haben sich in der Praxis ausserordentlich gut bewährt, denn sie sind zum einen relativ kostengünstig herstellbar und zum andern nehmen sie bei korrekter Verankerung beispielsweise durch Einbetonierung im Boden sehr hohe Zugkräfte auf, nebst dem, dass sie bei ihrem aus dem Boden vorstehenden Schlaufenteil um einen Winkel krümmbar sind, und damit einen optimalen Kraftfluss im montierten Zustand ermöglichen.

Der vorliegenden Erfindung wurde demgegenüber die Aufgabe zugrundegelegt, diesen bekannten Drahtseilanker derart weiterzubilden und entsprechend anzupassen, dass er sich für spezielle Montagen eignet.

Die Aufgabe ist erfindungsgemäss dadurch gelöst, dass die Seilenden mit einem Verbindungsstück verpresst sind, wobei dieses Verbindungsstück auf der den Seilenden abgekehrten Seite ein Verbindungsteil für den Anschluss eines im Boden ebenfalls verankarbaren Längselementes aufweist.

Bei einer vorteilhaften Ausführung ist das Verbindungsteil des Verbindungsstückes auf der den Seilenden abgekehrten Seite als Mutter mit einem entsprechenden Innengewinde ausgebildet, wobei diese Mutter auf das mit einem Schraubenteil versehenen Längselement vor oder nach der Verankerung dieses Längselementes aufschraubbar ist. Das Längselement ist stangenförmig oder als verlorene Bohrstange ausgebildet.

Mit dieser erfindungsgemässen Lösung kann in einem ersten Montageschritt dieses Seilankers ein Loch in den Boden gebohrt und je nach Bodenbeschaffenheit die Bohrstange gleich im Boden belassen werden, insbesondere dann, wenn der Boden nicht standfest ist und das Loch wieder in sich zusammenfallen sollte, oder es kann nach dem Aufbohren eine Stange in das Loch gestossen und darin verankert werden. Selbstverständlich kann auch eine verrohrte Bohrung vorgesehen werden.

Hierdurch ergeben sich verschiedene Vorteile, namentlich dass der Drahtseilanker auf handelsübliche Ankerstäbe aufgesetzt werden kann, oder dass er austauschbar ist, oder - wie bereits erwähnt - dass die Bohrstange nach dem Bohren gleich im Boden belassen und der Seilanker sich auf diese mit einem Schraubengewinde versehene Bohrstange aufschrauben lässt. Damit können ausserdem all die Fundamentierarbeiten unabhängig von der Netzinstallation durchgeführt werden und die Seilanker dann bloss auf die verankerten Längselemente aufgeschraubt und vorteilhaft mit Beton, Mörtel oder einem andern Füllmaterial im Boden verdeckt werden.

Ein Ausführungsbeispiel der Erfindung sowie weitere Vorteile derselben sind nachfolgend anhand der Zeichnung näher erläutert. Es zeigt:
- Fig.1: eine Ansicht eines erfindungsgemässen Drahtseilankers, der im Schnitt gezeigten Boden verankert ist,
- Fig.2: einen Querschnitt des Drahtseilankers im Bereich des Verbindungsstückes gemäss der Linie II - II nach Fig.1, und
- Fig.3: eine Steinschlag- bzw. Lawinenschutzverbauung in einer Seitenansicht.

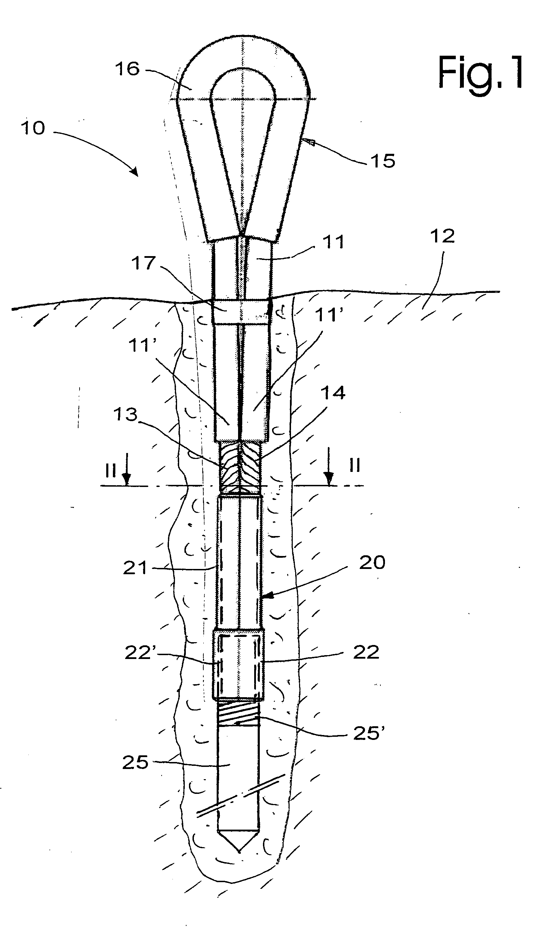

Fig.1 zeigt einen in einem angedeuteten Boden 12 befestigten Drahtseilanker 10, der insbesondere für Steinschlag- und Lawinenschutzsysteme verwendet wird. Er weist ein Drahtseil mit einer zum Boden 12 vorstehenden Seilschlaufe 15 und zwei im Boden verankerte Seilenden 13, 14 auf. Die Seilschlaufe 15 ihrerseits ist von einer Schutzhülle 11 ummantelt, deren beide Enden 11' sich ebenfalls bis in den Boden 12 annähernd bis zu den Seilenden 13, 14 erstrecken. Mit dieser Schutzhülle 15 wird ein Korrosionsschutz des Drahtseiles bezweckt. Zudem ist eine zusätzliche Hülse 16 vorgesehen, welche bei der vorstehenden Schlaufe 15 diese umgebend angeordnet ist. Ferner ist ein Ring 17 um die Seilenden 13, 14 angebracht, der als Anzeige für die Einbautiefe des Drahtseilankers 10 dienen soll.

Erfindungsgemäss sind die Seilenden 13, 14 mit einem Verbindungsstück 20 verpresst, wobei dieses Verbindungsstück 20 auf der den Seilenden 13, 14 abgekehrten Seite ein Verbindungsteil 22 für den Anschluss eines im Boden 12 ebenfalls verankerbaren Längselementes 25 aufweist.

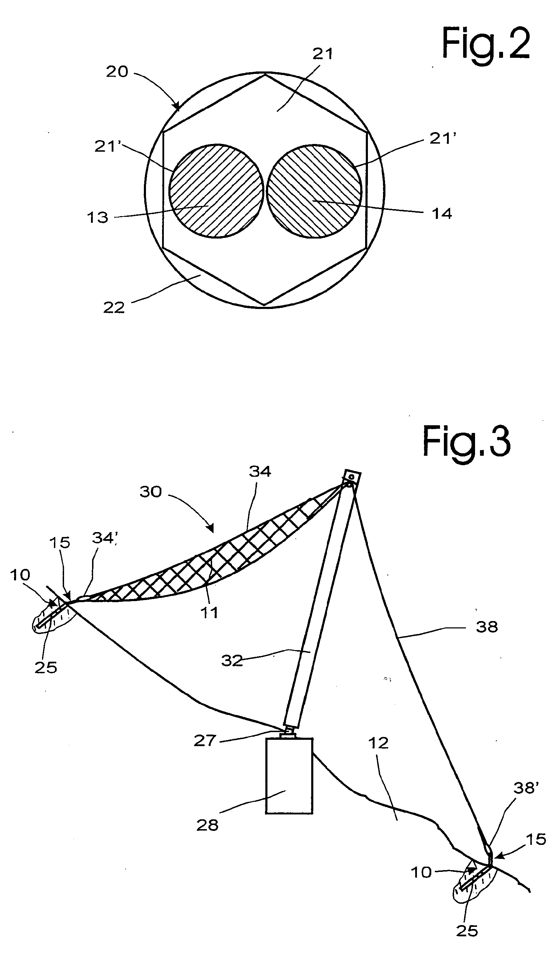

Gemäss Fig.2 ist dieses Verbindungsstück 20 in seinem vorderen Teil 21 mit zwei benachbarten Bohrungen 21' zur Aufnahme jeweils eines Seilendes 13, 14 versehen. Das Verbindungsstück ist im Bereich dieser Bohrungen 21' plastisch verformbar, so dass die Seilenden 13, 14 darin mittels einer handelsüblichen hydraulischen Presse verpressbar sind und damit eine dauerhafte gegenseitige Befestigung gebildet ist. Die Länge dieser Bohrungen 21' beträgt vorteilhaft ein Mehrfaches des Seildurchmessers, damit die Seilenden ausreichend fest gehalten sind. Das Verbindungsstück 20 ist hierbei im verpressten Teil 21 von einem ausgehend vorzugsweise runden Querschnitt zu einer mehrkantigen, vorzugsweise sechskantigen Aussenform verformt. Selbstverständlich könnte dieser Aussenquerschnitt auch andersförmig, bspw. rund, oval oder rechteckig aussehen. Mit Vorteil besteht dieses Verbindungsstück 20 aus einem plastisch verformbaren Stahl.

Das Verbindungsteil 22 des Verbindungsstückes 20 ist im Rahmen der Erfindung auf der den Seilenden 13, 14 abgekehrten Seite als Mutter mit einem Innengewinde 22' ausgebildet. Damit kann der Drahtseilanker 10 insgesamt auf das mit einem Schraubenteil 25' versehenen Längselement 25 vor oder nach der Verankerung dieses Längselementes aufgeschraubt werden. Das Längselement 25 ist als eine Stange oder als verlorene Bohrstange ausgebildet, wobei zumindest der Kopfbereich der Stange vorzugsweise mit einem Gewinde versehen ist.

Bei einer Montage wird beispielsweise als erstes ein Loch in den Boden 12 gebohrt. Anschliessend kann das Längselement 25 wie dargestellt in das Loch einbetoniert werden. Bei der Installation des Netzes kann dann der Drahtseilanker 10 als ganze Einheit auf das mit dem Gewinde 25' versehenen Längselement 25 aufgeschraubt und anschliessend noch bis zu dem an der Oberfläche des Bodens befindlichen Ring 17 ebenfalls mit Beton oder ähnlichem umfüllt werden.

Fig.3 zeigt ferner eine Anwendung von solchen erfindungsgemässen Drahtseilankern 10 bei einer herkömmlichen Steinschlag- bzw. Lawinenschutzverbauung 30. Letztere setzt sich aus auf jeweils einem Fundament 28 mittels Gelenken 27 gehaltenen Stützen 32, aus einem an der Oberseite der Stützen 32 fixierten Netz 31 und aus Trag- und Rückhalteseilen 34, 38 zusammen. Das Netz 31 ist hierbei in einer annähernd senkrechten Stellung zum Boden 12 angeordnet, so dass es im Stande ist, herunterfallende Steine oder dergleichen oder je nachdem Schneemassen sicher aufzufangen.

Die Drahtseilanker 10 halten zum einen solche das Netz 31 haltende Tragseile 34 und andererseits die Rückhalteseile 38 auf dem Boden 12 fest. Es ist ersichtlich, dass die Schlaufen 15 gegenüber dem Längselement 25 und dem Teil des Drahtseilankers 10 im Boden abgewinkelt sind, und zwar so, dass sie annähernd fluchtend zu den Trag- bzw. Rückhalteseile verlaufen. Das jeweilige Tragseil 34 bzw. das Rückhalteseil 38 ist durch eine gebildete Schlinge 34' bzw. 38' um die jeweilige Schlaufe 15 geführt.

Die Erfindung ist mit den oben erläuterten Ausführungsbeispielen ausreichend dargetan. Sie liesse sich jedoch noch in anderen Varianten darstellen. So könnte das auf der den Seilenden 13, 14 abgekehrten Seite vorhandene Verbindungsteil mit wenigstens einem als Seil ausgebildeten Längselement ebenfalls verpresst sein.

Diese äussere, die Seilschlaufe 15 und die in den Boden ragende Schutzhülle 11 ummantelnde Hülse 16 könnte statt rohrförmig auch schalenförmig ausgebildet sein und den oberen Bereich der Schlaufe auf seiner Innenseite umgeben, so dass ein um diese Schlaufe seinerseits geschlungenes Seilende zusätzlich gegen Abnützung geschützt ist.

Das Verbindungsstück könnte im Prinzip auch mehrteilig sein, indem ein mit den Seilenden verpresstes Teilstück und ein mit letzterem verbundenes separates Verbindungsteil vorgesehen ist.

Es könnten auch mehrere Bohrungen im Verbindungsstück vorgesehen sein, bspw. wenn zwei Schlaufen nebeneinander angeordnet wären. Unter dem Begriff Drahtseil sind selbstverständlich auch Drahtlitzen gegebenenfalls mit parallel geführten Drähten oder nur annähernd parallel zueinander angeordnete Drähte denkbar.

Das Längselement kann auch wiederum im Sinne einer Verbindung mit einem weiteren Ankerstab oder dergleichen als Längselement verbunden sein, d.h. es wäre dann das Verbindungsteil mit einem als Verbindungselement ausgebildeten Längselement verbindbar und das verankerbare Längselement dann an diesem Verbindungselement befestigt, dies als mittelbarer Anschluss des Längselementes am Verbindungsstück.

## Patentansprüche

1. Drahtseilanker, insbesondere für Steinschlag- oder Lawinenschutzsysteme, mit einer Seilschlaufe (15), welche mit den beiden Seilenden (13, 14) im Boden (12) verankerbar ist und wenigstens von einer Schutzhülle (11) zumindest teilweise ummantelt ist, **dadurch gekennzeichnet, dass**
die Seilenden (13, 14) mit einem Verbindungsstück (20) verpresst sind, wobei dieses Verbindungsstück (20) auf der den Seilenden (13, 14) abgekehrten Seite ein Verbindungsteil (22) für den mittelbaren oder unmittelbaren Anschluss eines im Boden (12) ebenfalls verankerbaren Längselementes (25) aufweist.

2. Drahtseilanker nach Anspruch 1, **dadurch gekennzeichnet, dass** das Verbindungsstück (20) in seinem vorderen Teil (21) mit zwei benachbarten Bohrungen (21') zur Aufnahme jeweils eines Seilendes (13, 14) versehen und zumindest im Bereich dieser Bohrungen (21') plastisch verformbar ist, so dass die Seilenden darin verpressbar sind und damit eine dauerhafte gegenseitige Befestigung gebildet ist.

3. Drahtseilanker nach Anspruch 1 oder 2, **dadurch gekennzeichnet, dass** das Verbindungsstück (20) im verpressten Teil (21) zu einer mehrkantigen, vorzugsweise sechskantigen, oder zu einer runden oder ovalen Aussenform verformt ist.

4. Drahtseilanker nach einem der vorhergehenden Ansprüche 1 bis 3, **dadurch gekennzeichnet, dass** das Verbindungsteil (22) auf der den Seilenden (13, 14) abgekehrten Seite als Mutter mit einem Innengewinde (22') ausgebildet ist und auf das mit einem Schraubenteil (25') versehenen Längselement (25) vor oder nach der Verankerung dieses Längselementes aufschraubbar ist.

5. Drahtseilanker nach einem der vorhergehenden Ansprüche 1 bis 4, **dadurch gekennzeichnet, dass** das Längselement stabförmig oder als verlorene Bohrstange ausgebildet ist.

6. Drahtseilanker nach einem der vorhergehenden Ansprüche 1 bis 4, **dadurch gekennzeichnet, dass** das auf der den Seilenden (13, 14) abgekehrten Seite vorhandene Verbindungsteil mit wenigstens einem als Seil ausgebildeten Längselement ebenfalls verpresst ist.

7. Drahtseilanker nach einem der vorhergehenden Ansprüche 1 bis 6, **dadurch gekennzeichnet, dass** das Verbindungsstück (20) aus einem plastisch verformbarem Stahl besteht.

8. Drahtseilanker nach einem der vorhergehenden Ansprüche 1 bis 7, **dadurch gekennzeichnet, dass** mindestens eine die Seilschlaufe (15) zumindest teilweise umschliessende Schutzhülle (11) vorgesehen ist, welche beim Verankern ebenfalls mit seinen Enden (11') in den Boden ragt.

9. Drahtseilanker nach einem der vorhergehenden Ansprüche 1 bis 8, **dadurch gekennzeichnet, dass** das Verbindungsstück mehrteilig ausgebildet ist, indem ein mit den Seilenden verpresstes Teilstück und ein mit letzterem verbundenes separates Verbindungsteil vorgesehen ist.
